# EUROPEAN PATENT APPLICATION

(11) **EP 1 871 111 A2**
(43) Date of publication of application: **26.12.2007**
(21) Application number: 07011454.1
(22) Date of filing: 12.06.2007
(51) Int. Cl.: H04N 7/16

(54) **Method and apparatus for providing centralized advertisement insertion**

(30) Priority: 19.06.2006 US 455511
(71) Applicant: GENERAL INSTRUMENT CORPORATION, Horsham, Pennsylvania 19044 (US)
(72) Inventor: Jost, Arthur P, Mount Laurel, New Jersey 08054 (US)
(74) Representative: Openshaw, Paul Malcolm

(57) **Abstract**

A method and apparatus of providing centralized advertisement insertion is disclosed. A base version of a stream is received. A localized version of the stream is received when the localized version differs from the base version. A composite stream is generated from the base version and the localized version.

In one embodiment, a method for providing a plurality of streams is disclosed. A base version of a stream is received. One or more localized versions of the stream is generated.

In another embodiment, a base version of a stream is distributed. A localized version of the stream is distributed when the localized version differs from the base version.

## Description

### BACKGROUND OF THE INVENTION

### Field of the Invention

The present invention relates to video distribution systems. In particular, this invention relates to a method and apparatus for providing centralized advertisement insertion in a video distribution system.

### Description of the Related Art

There is a desire to centralize local advertisement insertion equipment. Reasons for centralizing ad insertion include: consolidation of insertion equipment and centralization of encryption. Centralized ad insertion requires the distribution of multiple versions of each service that is to have ads inserted - one version for every ad zone. A major multiple service operator (MSO) utilizing a Master HE may typically have 36 to 45 ad-insertable services and from 2 to 40 ad zones. If a different version of each service were created for every ad zone, a tremendous amount of bandwidth would be required.

Therefore, there is a need in the art for a method and apparatus that is capable of significantly reducing the bandwidth required to support a centralized ad insertion scheme.

### SUMMARY OF THE INVENTION

In one embodiment, the present invention generally discloses a method and apparatus of providing centralized advertisement insertion. A base version of a stream is received. A localized version of the stream is received when the localized version differs from the base version. A composite stream is generated from the base version and the localized version.

In one embodiment, a method for providing a plurality of streams is disclosed. A base version of a stream is received. One or more localized versions of the stream is generated.

In another embodiment, a base version of a stream is distributed. A localized version of the stream is distributed when the localized version differs from the base version.

### BRIEF DESCRIPTION OF THE DRAWINGS

FIG. 1 illustrates a system configuration of an apparatus for providing centralized ad insertion according to one embodiment of the present invention;

FIG. 2 illustrates a block diagram of a method according to one embodiment of the present invention;

FIG. 3 illustrates a diagram of a relationship between a base version and a localized version of a stream according to one embodiment of the present invention;

FIG. 4 illustrates a block diagram of a method according to one embodiment of the present invention;

FIG. 5 illustrates the relationship between the base version of the service and the localized versions according to one embodiment of the present invention;

FIG. 6 illustrates a block diagram of a method according to one embodiment of the present invention;

FIG. 7 illustrates a block diagram of a method according to one embodiment of the present invention; and

FIG. 8 illustrates an embodiment of a system according to one embodiment of the present invention.

### DETAILED DESCRIPTION

Disclosed is a method and apparatus for distributing a localized version of a stream only when local content is being carried. Also disclosed is a method and apparatus of providing a mechanism at the edge device (i.e. QAM) to seamlessly switch between the common version, e.g. base version, and one or more localized versions of the stream as necessary.

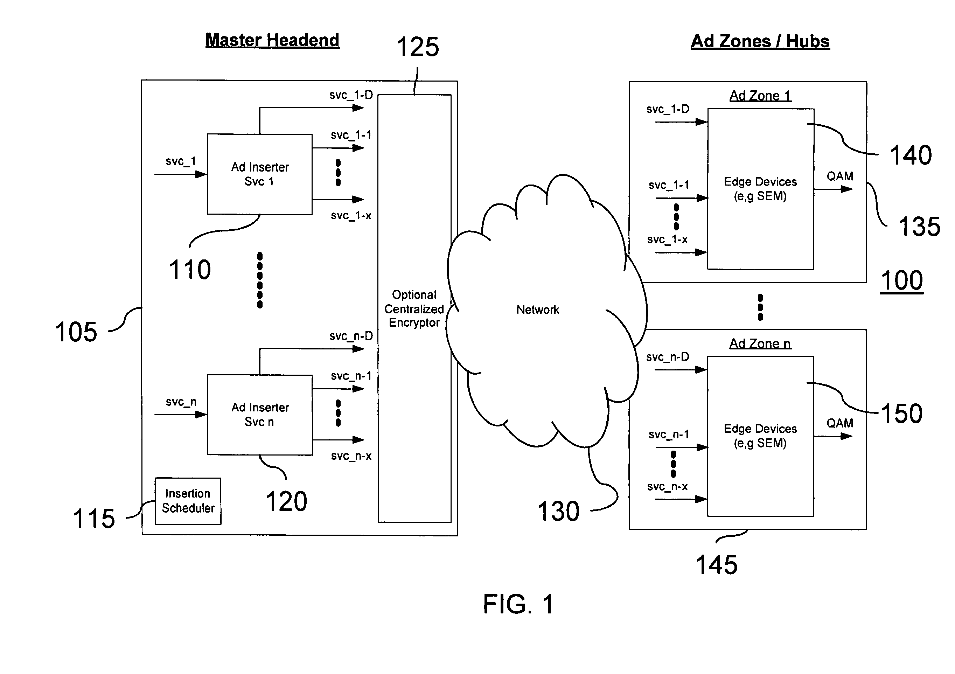

FIG. 1 illustrates a system configuration 100 of an apparatus for providing centralized ad insertion according to one embodiment. A master headend 105 comprises one or more ad inserters 110, 120 and an insertion scheduler 115. A plurality of unique video services, e.g. original services, (svc_1...svc_n) are received at a plurality of advertisement inserters 110, 120 (Ad Inserter Svc 1...Ad Inserter Svc N). The ad inserter 110, 120 processes the original service, e.g. stream, and inserts ads as appropriate, generating multiple output versions. Each ad inserter 110, 120 outputs a processed and delayed version of the original service (svc_1-D...svc_n-D), that streams continuously. The delay is not absolutely necessary, but is introduced to time-synchronize the common original version of the service with the localized versions in order to simplify stream synchronization in the edge devices. In addition to the svc_1-D...svc_n-D output, each ad inserter 110, 120 creates a plurality of localized services (e.g., streams) labeled svc_1-1... svc_1-x and svc_n-1... svc_n-x, where x indicates the number of localized streams (e.g., versions) for a specific ad zone.

The delayed version of the original version, e.g. the base version, and the localized versions may be optionally output to centralized encryptor 125. In any event, the base version and localized versions for each service may be encrypted before being distributed to an edge device 140, 150 within a respective ad zone 135, 145 via network 130. In one embodiment, network 130 comprises an internet protocol (IP) video distribution network.

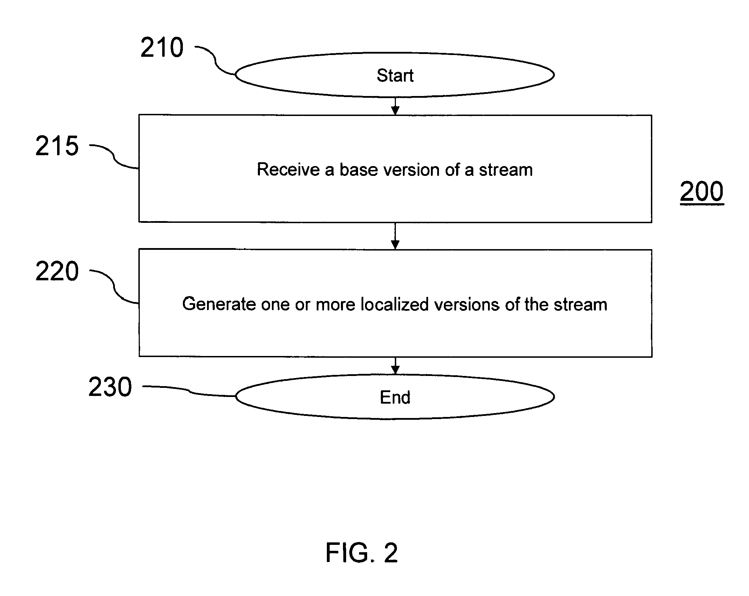

FIG. 2 illustrates a block diagram of a method 200 according to one embodiment. FIG. 2 begins at step 210 and proceeds to step 215. At step 215, a base version of a stream is received. In one embodiment, the base version is received at ad inserter service 110, 120 residing at headend 125. At step 220, one or more localized versions of the stream are generated. In one embodiment, the one or more localized versions are generated by ad inserter service 110, 120. In one embodiment, each of the one or more localized versions comprises local content and portions of the base version before and after the local content.

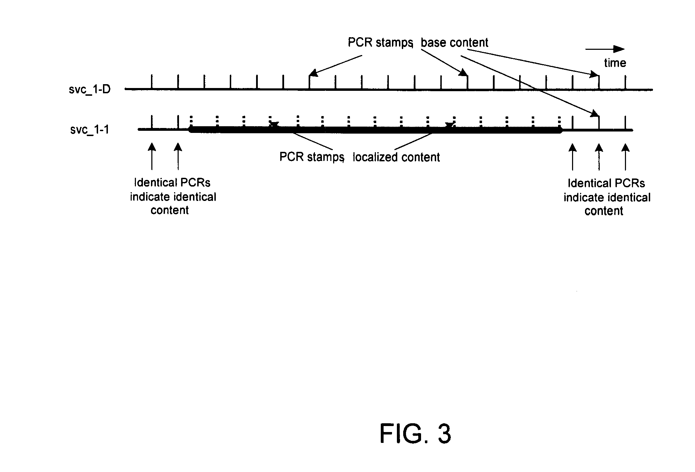

In one embodiment, ad inserter service 110, 120 generates the one or more localized versions such that the program clock references (PCRs) of the base version and the portions before and after the local content are identical, and program clock references of the base version and portions during the local content are different. This relationship is described in FIG. 3.

FIG. 3 illustrates the use of program clock references to maintain synchronization according to one embodiment. To aid in the synchronization of the streams before and after the localized segment, additional processing may be used to signal when the localized segment begins and ends. The additional processing may be based on program clock references (PCRs) as shown in FIG. 3. In the portion of the localized stream that is identical to the base content, the PCR timestamps are identical. Where local content is inserted, the PCRs have different values (i.e. are inserted at different temporal locations in the stream). This method may be enforced by ad insertion device 110, 120. Using such a method, the edge device may synchronize the two input streams, i.e. base stream and localized stream, and detect when the localized content has started and ended without having to compare video packets from both sources.

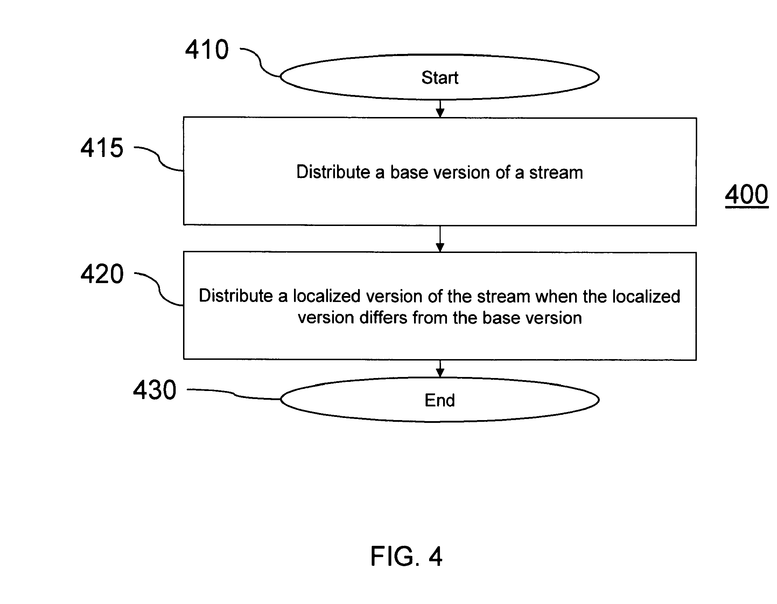

FIG. 4 illustrates a block diagram of a method 400 according to one embodiment. FIG. 4 begins at step 410 and proceeds to step 415. At step 415, a base version of a stream is distributed. At step 420, a localized version of the stream is distributed when the localized version differs from the base version.

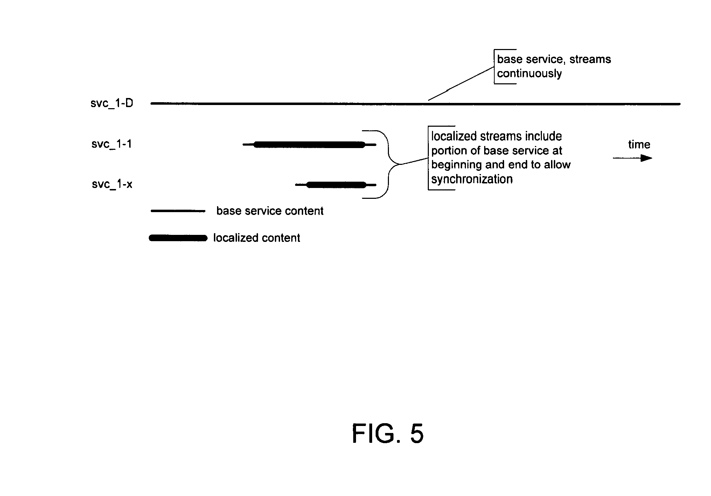

FIG. 5 illustrates the relationship between the base version of the service and the localized versions. Rather than constantly distributing all localized versions of each service, using enormous amounts of bandwidth, localized versions of the service would only be transmitted during times when the local version actually differed from the basic service. In one embodiment, the localized version comprises local content and portions of the base version before and after the local content. The ad-insertion scheduling and control system 115 could be used to ensure that the number of localized streams being distributed at any given time did not exceed a pre-configured value so as not to exceed the available network capacity.

In one embodiment, the localized version of the service starts streaming shortly prior to the localized content being inserted, and continues for a short time after the local content has ended. This would afford the edge device 140, 150 the opportunity to synchronize its stream buffers (not shown) and execute the seamless switchovers. Since a centralized ad-inserter processes both the common and localized streams, a non-video portion of the stream (e.g. program clock references (PCRs)) can be manipulated to allow for unambiguous synchronization.

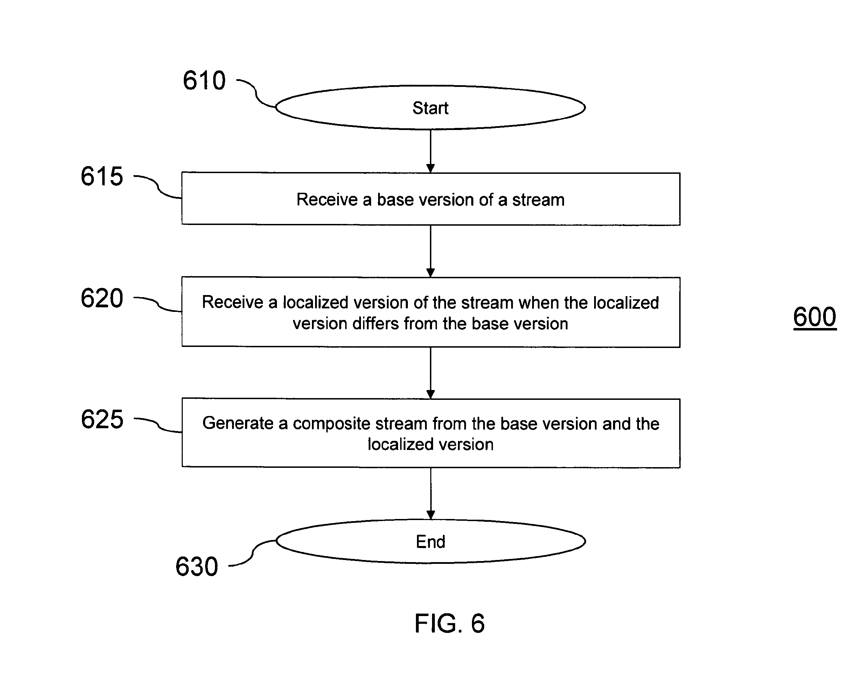

FIG. 6 illustrates a block diagram of a method 600 according to one embodiment. FIG. 6 begins at step 610 and proceeds to step 615. At step 615, a base version of a stream is received. At step 620, a localized version of the stream is received when the localized version differs from the base version. In step 625, a composite stream is generated from the base version and the localized version.

When a localized stream is present, the localized stream takes precedence and is selected by an edge device. When the localized stream is not present, the edge device reverts back to the common version of the stream.

In one embodiment, the composite stream is generated by detecting a localized version at edge device 140,150. Upon detecting a localized version, edge device 140, 150 synchronizes the base version with the local version. When synchronization is achieved, edge device 140, 150 seamlessly switches from the base version to the localized version near a start point of the localized version. Edge device 140, 150 seamlessly switches back to the base version near an end point of the localized version.

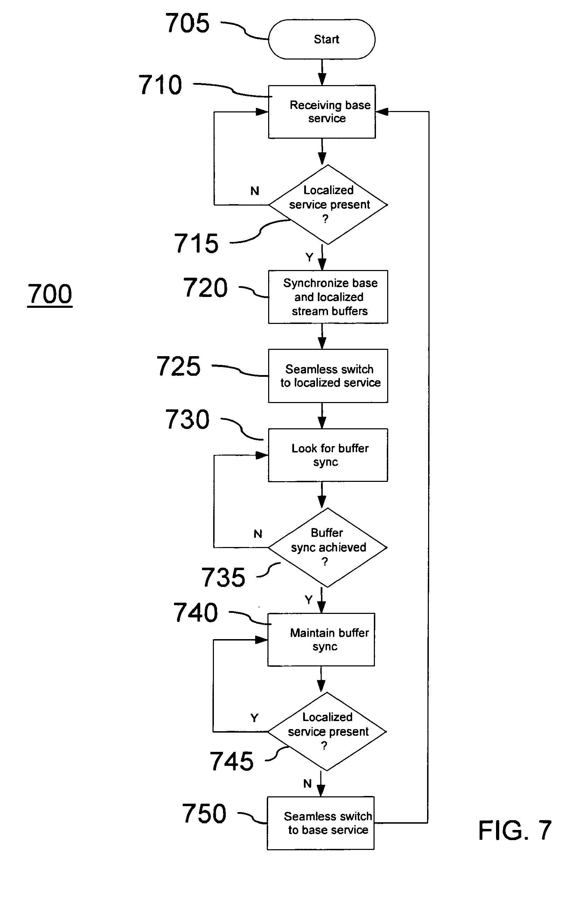

FIG. 7 illustrates a block diagram of a method 700 according to one embodiment. FIG. 7 begins at step 705 and proceeds to step 710. At step 710, a base service, e.g. base version, is received. At step 715, a determination is made as to whether a localized service, e.g. version, is present. If there is no localized service present, the base service continues to be received at step 710.

If there is a localized service present, the base stream (e.g., base version) and localized stream (e.g., localized version) are synchronized at step 720. The synchronization may be employed using one or more buffers (not shown) associated with the base stream and localized stream at edge device 140, 150. Once the base and localized stream buffers are synchronized, a seamless switch to the localized service is performed at step 725.

In step 730, edge device 140, 150 checks for buffer synchronization. At step 735 a determination is made as to whether buffer synchronization has been achieved. If buffer synchronization has not been achieved, edge device 140, 150 looks for buffer synchronization at step 730.

If buffer synchronization has been achieved, buffer synchronization is maintained at step 740. At step 745, a determination is made as to whether the localized service is still present. If localized service is still present, buffer synchronization is maintained at step 740. If localized service is not present, a seamless switch to the base service is performed at step 750.

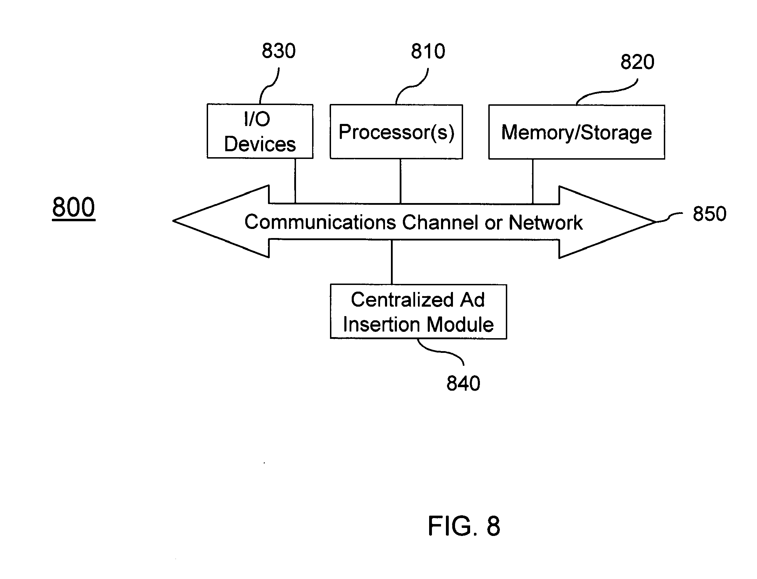

FIG. 8 illustrates a block diagram of a stream processing device or system 800 of the present invention. Specifically, the system can be employed to provide centralized ad insertion. In one embodiment, the stream processing device or system 800 is implemented using a general purpose computer or any other hardware equivalents.

Thus, stream processing device or system 800 comprises a processor (CPU) 810, a memory 820, e.g., random access memory (RAM) and/or read only memory (ROM), a centralized ad insertion module 840, and various input/output devices 830, (e.g., storage devices, including but not limited to, a tape drive, a floppy drive, a hard disk drive or a compact disk drive, a receiver, a transmitter, a speaker, a display, an image capturing sensor, e.g., those used in a digital still camera or digital video camera, a clock, an output port, a user input device (such as a keyboard, a keypad, a mouse, and the like, or a microphone for capturing speech commands).

It should be understood that the centralized ad insertion module 840 may be implemented as one or more physical devices that are coupled to the CPU 810 through a communication channel, e.g. communication channel or network 850. Alternatively, the centralized ad insertion module 840 can be represented by one or more software applications (or even a combination of software and hardware, e.g., using application specific integrated circuits (ASIC)), where the software is loaded from a storage medium, (e.g., a magnetic or optical drive or diskette) and operated by the CPU in the memory 820 of the computer. As such, the centralized ad insertion module 840 (including associated data structures) of the present invention can be stored on a computer readable medium, e.g., RAM memory, magnetic or optical drive or diskette and the like. It should be apparent to one having skill in the art that centralized ad insertion module 840 , may comprise more than one module, and depending on the implementation, each module may have its own CPU, its own set of I/O devices, and its own memory. These modules may be physically separate devices connected together via a communications channel.

The methods of this disclosure are applicable to cable/Hybrid Fiber Coax (HFC) systems where the stream selection is managed by an edge device such as a Smartstream Encryptor Modulator (SEM). However, this can be extended to other types of networks, and even allow for stream selection in the settop.

While the foregoing is directed to embodiments of the present invention, other and further embodiments of the invention may be devised without departing from the basic scope thereof, and the scope thereof is determined by the claims that follow.

## Claims

1. A method of providing centralized advertisement insertion, comprising:
receiving a base version of a stream;
receiving a localized version of said stream when the localized version differs from the base version; and
generating a composite stream from said base version and said localized version.

2. An apparatus for providing centralized advertisement insertion, comprising:
means for receiving a base version of a stream;
means for receiving a localized version of said stream when the localized version differs from the base version; and
means for generating a composite stream from said base version and said localized version.

3. The apparatus of claim 2, wherein said localized version comprises local content and portions of said base version before and after said local content.

4. The apparatus of claim 2, wherein generating said composite stream comprises:
detecting said localized version;
synchronizing said base version and said localized version;
seamlessly switching from said base version to said localized version; and
seamlessly switching back to said base version from said localized version.

5. The apparatus of claim 4, wherein detecting said localized version comprises detecting a start point and an end point for said localized version.

6. The apparatus of claim 4, wherein synchronization is maintained by comparing program clock references of said base version and said localized version.

7. A computer-readable medium having stored thereon a plurality of instructions, the plurality of instructions including instructions which, when executed by a processor, cause the processor to perform the steps of a method of providing centralized advertisement insertion, comprising of:
receiving a base version of a stream;
receiving a localized version of said stream when the localized version differs from the base version; and
generating a composite stream from said base version and said localized version.

8. A method of providing centralized advertisement insertion, comprising:
distributing a base version of a stream; and
distributing a localized version of said stream when the localized version differs from the base version.

9. An apparatus for providing a plurality of streams, comprising:
a headend; and
an ad inserter service within said headend for receiving a base version of a stream and generating one or more localized versions of said stream.

10. A method for providing a plurality of streams, comprising:
receiving a base version of a stream at an ad inserter service; and
generating one or more localized versions of said stream using said ad inserter service.
